# EUROPEAN PATENT APPLICATION

(11) **EP 4 588 739 A1**
(43) Date of publication of application: **23.07.2025**
(21) Application number: 24152549.2
(22) Date of filing: 18.01.2024
(51) Int. Cl.: B60T 17/00

(54) **ACTUATOR ARRANGEMENT, BRAKING CONTROL SYSTEM OF A VEHICLE, VEHICLE AND USE**

(71) Applicant: KNORR-BREMSE Systeme für Nutzfahrzeuge GmbH, 80809 München (DE)
(72) Inventor: Jenei, Márton Levente, H-6000 Kecskemet (HU)

(57) **Abstract**

An aspect of the present invention relates to an actuator arrangement (1) for opening and closing a gas stream (2), the actuator arrangement (1) comprising: an actuator element being movable between an open and a closed position for opening and closing the gas stream (2); a gas passage (4) downstream of the actuator element, the gas passage (4) having a gas inlet (4a) and a gas outlet (4b); and a structure (10) comprising: a central portion (12); and a plurality of rotation causing portions (14) which are disposed around a circumference of the central portion (12) and extend outwardly from the central portion (12); wherein the plurality of rotation causing portions (14) of the structure (10) is disposed between the gas inlet (4a) and the gas outlet (4b) of the gas passage (4); and wherein the plurality of rotation causing portions (14) is formed in such a way that the gas stream (2), when passing the structure (10) in the gas passage (4), obtains a rotational motion around the central portion of the structure (10). Further aspects of the present invention relate to a braking control system of a vehicle for controlling a gas pressure in a braking system of the vehicle, a vehicle comprising a braking control system for controlling a gas pressure in a braking system of the vehicle and a use of a structure for noise reduction of an actuator arrangement.

## Description

The present invention relates to an actuator arrangement for opening and closing a gas stream, a braking control system of a vehicle for controlling a gas pressure in a braking system of the vehicle, a vehicle comprising a braking control system for controlling a gas pressure in a braking system of the vehicle and a use of a structure for noise reduction of an actuator arrangement, in particular a gas valve, for opening and closing a gas stream.

Actuator arrangements, which contain, for example, a plurality of tilting armature valves, are used, for example, for pressure control, for example in a vehicle brake system and air treatment system, such as in a commercial vehicle or bus for passenger transport. For example, a brake system for a vehicle with an electronic service brake system includes several solenoid valves for pressure control, for example in the form of inlet and outlet valves for a pressure control module.

In these actuator arrangements, a high level of noise may occur, when opening the gas stream, due to friction between expanding high pressure air and its surrounding surfaces.

In some implementations to reduce noise, damping elements are used. However, these damping elements, in the case of an electromagnetic actuator arrangement, may negatively affect the magnetic force acting on the armature body, as this often increases the air gap between the armature body and the coil core and thus increases the magnetic resistance, which in turn reduces the efficiency of the solenoid valve.

Therefore, it would be beneficial to provide actuator arrangement in which an improved noise level reduction can be achieved upon actuating the actuator arrangement.

This is achieved by an actuator arrangement for opening and closing a gas stream according to independent claim 1. Embodiments result from the dependent claims. The invention further concerns a braking control system of a vehicle for controlling a gas pressure in a braking system of the vehicle, wherein the braking control system comprises an actuator arrangement according to the invention, a vehicle comprising a braking control system for controlling a gas pressure in a braking system of the vehicle and a use of a structure for noise reduction of an actuator arrangement, in particular a gas valve, for opening and closing a gas stream.

An aspect of the present invention relates to an actuator arrangement for opening and closing a gas stream, the actuator arrangement comprising: an actuator element being movable between an open and a closed position for opening and closing the gas stream; a gas passage downstream of the actuator element, the gas passage having a gas inlet and a gas outlet; and a structure comprising: a central portion; and a plurality of rotation causing portions which are disposed around a circumference of the central portion and extend outwardly from the central portion; wherein the plurality of rotation causing portions of the structure is disposed between the gas inlet and the gas outlet of the gas passage; and wherein the plurality of rotation causing portions is formed in such a way that the gas stream, when passing the structure in the gas passage, obtains a rotational motion around the central portion of the structure.

Advantageously, the use of a structure according to aspects of the invention in an actuator arrangement allows for lowering the noise level. The structure makes the way the gas stream needs to travel longer. It creates a more laminar and thus guided flow instead of a turbulent flow. The structure provides a smoother expansion of the gas stream. As a result, in an actuator arrangement according to the invention, the noise level may be significantly reduced, e.g. up to 3 to 4 db(A).

According to an embodiment, the gas stream is an air stream.

The actuator element is configured to open and close the gas stream. It may be a magnetic plate or cover to prevent the gas stream from flowing when the actuator element is in the closed position. The actuator element may be switched between the open and closed position by applying a magnetic field to the actuator element.

The gas passage may be a tunnel, a tube or a pipe through which the gas stream may flow. The gas inlet and the gas outlet of the gas passage may be an opening through which the gas stream may enter or exit the gas passage respectively.

The central portion of the structure may preferably be cylindrical. The structure, in particular the central portion, may have a longitudinal and a lateral or transversal, in particular radial, extension. Along its longitudinal direction of extension, the central portion may vary in thickness. The central portion may be tapered along its longitudinal direction of extension.

The structure, in particular the central portion, may have a length up to about 100 mm and/or a width up to about 40 mm. The structure, in particular the central portion, may particularly have a length of about 100 mm and/or a width of about 40 mm.

The plurality of rotation causing portions may comprise 2, 3, 4, 5, 6, 7, 8, 9, 10, 11, 12, 13, 14, 15, 16, etc. rotation causing portions. The plurality of rotation causing portions may particularly comprise between 2 and 8 rotation causing portions.

The structure may additionally be inserted in a cylinder or a sleeve to provide side guidance.

The plurality of rotation causing portions are particularly formed in such a way that the gas stream loses a part of its translational kinetic energy when encountering and passing the plurality of rotation causing portions. A part of the translational kinetic energy of the gas stream is transferred into rotational energy. The rotational motion obtained by the gas stream may be around a longitudinal axis of the central portion. The longitudinal axis may be an axis of high rotational symmetry of the structure, in particular the central portion. The rotational motion may include a spin or circular motion, in particular in form of a whirlpool, of the gas stream around the central portion in addition to the motion of expansion of the gas stream, i.e. from the gas inlet to the gas outlet. When encountering the plurality of rotation causing portions, the gas stream may start circulating in circumferential direction of the central portion while moving along the central portion in longitudinal direction of the central portion.

The plurality of rotation causing portions allows for increasing the effective path length the gas stream propagates along between the gas inlet and the gas outlet. The plurality of rotation causing portions further allows for increasing the effective cross-section of the gas passage. In particular, the plurality of rotation causing portions affects the expansion of the gas stream as if the gas passage widens up in direction from the gas inlet to the gas outlet. The pressure of the gas stream opened by the actuator element may be reduced while the gas stream still expands linearly, which reduces noise upon expansion.

The pressure of the gas stream may be in the range between 0 and about 20 bar. The pressure of the opened gas stream may particularly be about 20 bar. The expansion velocity of the gas stream may reach up to 1000 m/s. It may particularly be about 1000 m/s.

In an embodiment, the structure has a screw-like geometry or drilling-bit-like geometry in a direction between the gas inlet and the gas outlet of the gas passage. The plurality of rotation causing portions may be disposed and formed such that the structure may have one or more threads.

Each of the aforesaid geometries may force the gas stream to travel in a circular motion around the central portion and, thereby, expand smoothly.

In an embodiment, two adjacent rotation causing portions of the plurality of rotation causing portions form a channel which extends in a circumferential direction of the central portion and in an axial direction of the central portion.

In an embodiment, at least one of the plurality of rotation causing portions extends spirally or helically along the central portion. Exactly one or a part of the plurality of rotation causing portions extends spirally or helically. Alternatively, all of the plurality of rotation causing portions extend spirally or helically.

In an embodiment, a pitch of at least one of the plurality of rotation causing portions is varying, in particular increasing and/or decreasing, along the central portion, in particular in direction between the gas inlet and the gas outlet. The pitch of exactly one or a part of the plurality of rotation causing portions may vary. Alternatively, the pitch of all of the plurality of rotation causing portions may vary.

By varying the pitch of the rotation causing portions, the effective cross-section for the gas stream may be varied.

The pitch variation may have some functional relation with the route of the gas stream, e.g. the path length of the gas passage. For instance, the pitch may increase linearly or quadratically with respect to the route of the gas stream.

Varying the pitch may include increasing and/or decreasing the pitch.

In some or, alternatively, in all parts along the central portion, the pitch may not be varying and/or may be constant.

In an embodiment, the actuator arrangement further comprises a guide sleeve downstream the structure and having a nozzle-like shape with gas twisting ribs.

Providing such a guide sleeve may ensure a constant linear expansion of the gas stream and preserve the rotational motion of the gas stream, in particular a circular whirlpool-like momentum of the gas stream.

In a particularly advantageous embodiment, the actuator arrangement comprises the guide sleeve in addition to varying pitch of at least one of the plurality of rotation causing portions along the central portion of the structure.

In an embodiment, the structure is a one-piece construction.

This allows for producing the structure of an actuator arrangement of the present invention cost-efficiently and in a mass-production process such as injection molding. Furthermore, the complexity of an actuator arrangement with reduced noise may be reduced. What is more, as a one-piece construction, the structure is particularly resistant to high pressure gas streams.

The structure may alternatively be a multiple-piece construction. For example, the rotation causing portions may be formed as a separate part or several separate parts.

According to an embodiment, the structure is formed out of a polymer material and/or metal and/or rubber.

In an embodiment, at least one of the plurality of rotation causing portions is formed as a blade or a fin.

These shapes turned out to have very good aerodynamic properties to manipulate the flow or the motion of the gas stream and cause the rotational motion in the gas stream.

In an embodiment, the structure is a removable insert in the gas passage.

Advantageously, according to this embodiment, the structure may be inserted into the gas passage and may be removed again. Already existing actuator arrangements may be equipped with this structure to reduce their noise caused by expanding high pressure gases if necessary.

Alternatively, the structure may be fixedly connected to the gas passage, in particular to the inside of the gas passage. For example, the structure may be glued or welded or formed into the gas passage.

In an embodiment, the actuator arrangement is a gas valve, in particular an air valve.

According to an embodiment, the gas valve is configured for a braking control system of a vehicle for controlling a gas pressure in a braking system of the vehicle.

In particular, the actuator arrangement may be configured to fulfil legal noise requirements according to ECE R51. The legal noise requirements according to ECE R51 are 72 dB(A) at a distance of 7 m.

Optionally, the structure may further comprise an anchor portion at an axial end of the central portion.

This anchor portion may be used as guidance to a piston.

According to an embodiment, the actuator arrangement, in particular the structure, is configured for high pressure gas streams of about 10 to about 13 bar.

A further aspect of the present invention relates to a braking control system of a vehicle for controlling a gas pressure in a braking system of the vehicle, comprising: an actuator arrangement according to the above-mentioned respective aspect of the invention or one of its embodiments.

Advantageously, by incorporating an actuator arrangement according to the the above-mentioned respective aspect of the invention or one of its embodiments, a particularly silent braking control system of a vehicle may be provided since exhaust noise may be reduced.

A further aspect of the present invention relates to a vehicle, comprising: a braking control system according to the above-mentioned respective aspect of the invention or one of its embodiments for controlling a gas pressure in a braking system of the vehicle.

Advantageously, by incorporating a braking control system according to the above-mentioned respective aspect of the invention or one of its embodiments, a particularly silent vehicle may be provided since exhaust noise may be reduced.

According to an embodiment, the vehicle may be a car, a bus or a truck.

A further aspect of the present invention relates to a use of a structure for noise reduction of an actuator arrangement, in particular a gas valve, for opening and closing a gas stream, the actuator arrangement comprising: an actuator element being movable between an open and a closed position for opening and closing the gas stream; and a gas passage downstream of the actuator element, the gas passage having a gas inlet and a gas outlet; providing the structure in the actuator arrangement, wherein the structure comprises: a central portion; and a plurality of rotation causing portions which are disposed around a circumference of the central portion and extend outwardly from the central portion; wherein the plurality of rotation causing portions of the structure is disposed between the gas inlet and the gas outlet of the gas passage; and wherein the plurality of rotation causing portions is formed in such a way that the gas stream, when passing the structure in the gas passage, obtains a rotational motion around the central portion of the structure.

It is noted that the description made with reference to the actuator arrangement of the respective aspect of the invention and the structure comprised by the actuator arrangement, including the description of individual features, embodiments and advantages, can be transferred and applied to the other aspects correspondingly.

According to an embodiment, the step of providing the structure comprises adding the structure to or inserting the structure in the gas passage.

In the following, further embodiments will be described with reference to the drawings. It is noted that individual features of the invention shown in the drawings may be combined to yet further embodiments.

In the drawings, it is shown:
- Fig. 1:: a schematic top view of a gas passage and a structure of an actuator arrangement according to an embodiment of the present invention;
- Fig. 2:: a schematic sectional view of the gas passage and the structure shown in Fig. 1;
- Fig. 3:: a schematic sectional view of the gas passage and the structure shown in Fig. 2;
- Fig. 4:: a perspective view of a structure of an actuator arrangement according to an embodiment of the present invention;
- Fig. 5:: a cross-sectional view of an embodiment of the actuator arrangement according to the present invention; and
- Fig. 6:: a diagram showing the increase of the effective cross-section in relation to the gas route of a gas stream in the actuator arrangement as shown in Fig. 5.

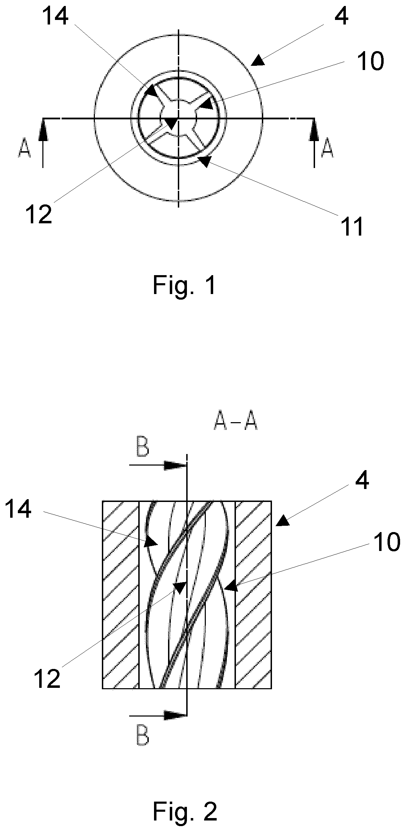

**Fig. 1** shows a schematic top view of a gas passage 4 of an embodiment of the actuator arrangement 1 according to the first aspect of the present invention. The gas passage 4 is embodied as a cylindrical tube or pipe. The gas passage 4 contains a structure 10 comprising a central portion 12 and four rotation causing portions 14 that extend from the circumference of the central portion 12 to the inner wall of the gas passage 4.

Between the gas passage 4 and the structure 10, there is an gas, in particular air, gap in order to ensure proper assembly.

The line and corresponding arrows A-A in Fig. 1 depict the cross-section and viewing direction of Fig. 2.

**Fig. 2** shows the cross-section along the line A-A in Fig. 1 of the gas passage 4 and the structure 10. The central portion 12 has cylindrical shape and extends inside and along the inner wall of the gas passage 4. The rotation causing portions 14 extend helically around the central portion 12 and form a screw-like or thread-like geometry of the structure 10.

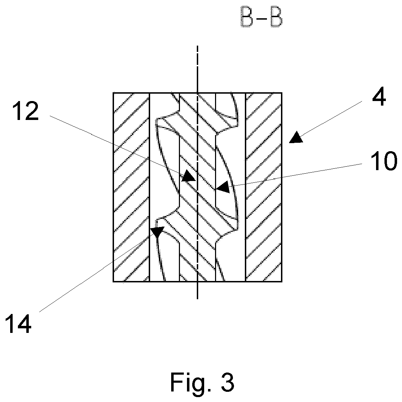

The line and corresponding arrows B-B in Fig. 2 depict the cross-section and viewing direction of Fig. 3.

**Fig. 3** shows the cross-section along the line B-B in Fig. 2 of the gas passage 4 and the structure 10. In Fig. 3, it is depicted that the pitch of the rotation causing portions 14 varies from bottom to top of Fig. 3. The pitch may first be constant, then increase linearly and then decrease or stay constant again.

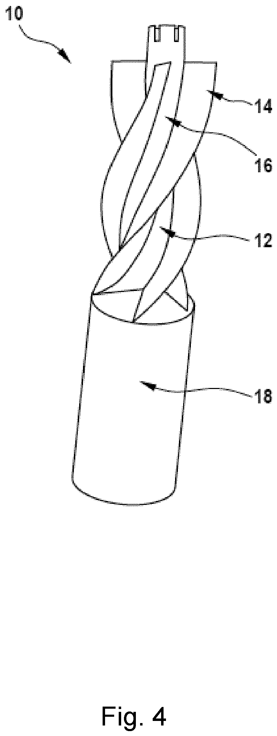

**Fig. 4** shows a perspective view of the structure 10. It is shown that the structure 10 is a one-piece construction. The plurality of rotation causing portions 14 extend along the central portion 12 in such a way that two adjacent rotation causing portions form a channel 16 respectively. Such a channel 16 may extend spirally or helically around the central portion 12 and form a thread. The structure 10 has an anchor portion 18 at an axial end, in particular a bottom end as shown in Fig. 4, of the central portion 12. This anchor portion 18 is used as a guidance to a piston.

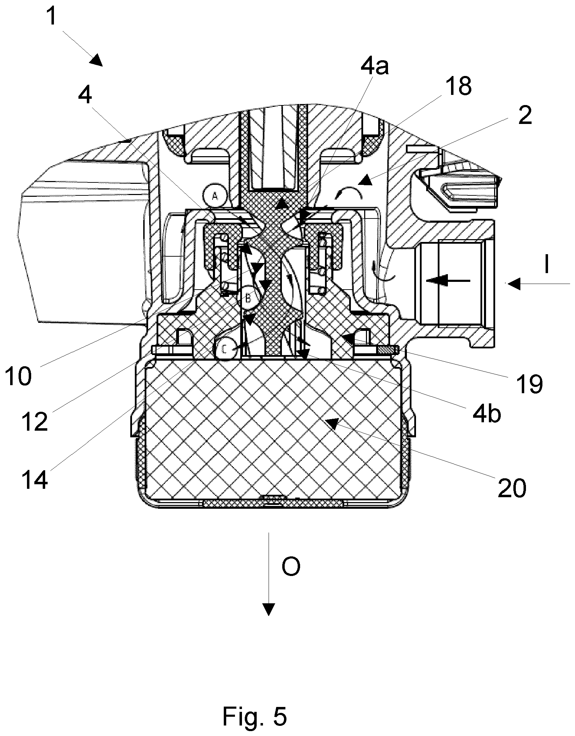

**Fig. 5** shows a gas valve 1 including, in a gas passage 4 which is downstream of an actuator element (not shown) for opening and closing a gas stream 2, the structure 10 as depicted in the Figs. 1 to 4. The gas passage 4 has a gas inlet 4a and a gas outlet 4b. The structure 10 is disposed in the gas passage 4 such that the rotation causing portions 14 extend between the gas inlet 4a and the gas outlet 4b so that a gas stream 2 entering the gas passage 4 via the gas inlet 4a passes the structure 10 and its rotation causing portions 14. In Fig. 5, it is shown that, when the actuator element is moved to open position, a high pressure gas input I is opened and flows towards the gas inlet 4a, where it enters the gas passage 4 and reaches the structure 10. The structure 10 has screw-like or drilling-bit-like geometry between the gas inlet 4a and the gas outlet 4b. The rotation causing portions 14 extend between the gas inlet 4a and the gas outlet 4b and along the central portion 12 of the structure 10 to form one or more threads. When passing the structure 10, the high pressure gas stream 2 obtains a rotational or circular motion like a whirlpool around the central portion 12, caused by the form of the rotation causing portions 14, while the gas stream 2 is still propagating through the gas passage 4 from the gas inlet 4a to the gas outlet 4b. However, as the gas stream 2 obtains the rotational motion, its propagation or expansion velocity in the direction from the gas inlet 4a to the gas outlet 4b is slowed down. Thereby, the pressure of the initial high pressure gas input stream I is reduced and the gas stream 2 can exhaust from the gas outlet 4b to the environment as low pressure gas output O.

As further shown in Fig. 5, by adding the structure 10 to the gas passage 4, the gas passage 4 may be divided into three sections separated from each other by the three gas passage points or regions A, B and C with respect to the length of the gas passage 4. Through these regions and the corresponding sections, the structure 10 provides an increase of the effective cross-section of the gas passage 4. That is, adding the structure 10 to the gas passage 4 can be seen as if the cross-section of the gas passage 4 is increased to lower the gas pressure and provide a smoother expansion of the gas stream 2.

In an embodiment, the rotation causing portions 14 of the structure 10 may have varying pitch along the central portion 12 of the structure 10 and the gas valve 1 may additionally comprise a guide sleeve 19 downstream the structure 10 and having, at a portion of the guide sleeve, in particular a bottom portion, a nozzle-like shape with gas twisting ribs.

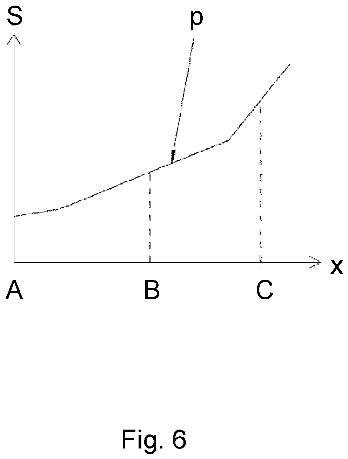

**Fig. 6** shows a diagram depicting the effective cross-section S of the gas passage 4 as a function of the gas route x along the gas passage 4 from the gas inlet 4a to the gas outlet 4b. The diagram shows that, by the presence of the structure 10 and its rotation causing portions 14, the effective cross-section S starts to increase linearly in the section between the points or regions A and B of the gas passage 4. In approximately the second third of the section between A and B, the slope p of the effective cross-section function, i.e. the increase of the effective cross-section per gas route interval, increases due to varied pitch of the rotation causing portions 14 of the structure 10 along the gas passage 4 between the gas inlet 4a and the gas outlet 4b so that the effective cross-section increases still linearly but more rapidly. In approximately the last third of the section between B and C, the slope p is increased further so that the effective cross-section still increases linearly but even more rapidly. In other words, from point or region A of the gas passage 4 over B to C, the expansion of the gas stream 2 is slowed down and thereby rendered smoother by the presence of the structure 10 in the gas passage 4 and depending on the pitch of the rotation causing portions 14 of the structure 10 between the gas inlet 4a and the gas outlet 4b.

In particular, as for example shown in Fig. 6, the effective cross-section depends substantially on the pitch at the shown middle section between A and B. If the pitch was constant, there would also be a constant effective cross-section. However, the effective cross-section may be changed by changing the outer diameter of the gas passage 4, e.g. like a cone that opens up. The steeper linear effective cross-section (third section between B and C) may be achieved by a guide sleeve 19, which opens up the pathway of the exhausting gas. The bottom portion of the guide sleeve 19 between a silencer mesh 20 and the structure 10 may have a nozzle-like shape with gas twisting ribs, ensuring a constant linear expansion and preserving the circular whirlpool-like momentum of the gas. That is, while the slope of the curve in Fig. 6 is directly related to the pitch in the middle section between A and B, for the last section between B and C, the slope may be determined by the nozzle shape of the guide sleeve 19 and the gas twisting ribs.

In summary, the inventor has recognized that the present invention provides a solution to reducing high noise levels of expanding gases, in particular air, due to friction with surrounding surfaces in actuator arrangements. The inventor has recognized that a solution may be to force an expanding gas to travel in a circular laminar gas flow (like a whirlpool) inside an actuator arrangement such as a gas valve. Thereby, the gas path length is increased, the gas propagates in a more laminar and guided flow instead of a turbulent flow, and the gas can expand more smoothly.

All this may in particular be accomplished by the use of a structure having a thread-like geometry in the actuator arrangement with varied increasing pitch that forces the gas to travel in a circular motion and expand smoothly. The screw part of the structure may be inserted in a cylinder to provide side guidance.

This way of noise reduction may in principle be applied for all gas devices that exhaust gas to the environment, such as gas valves.

### LIST OF REFERENCE SIGNS

- 1: actuator arrangement
- 2: gas stream
- 4: gas passage
- 4a, 4b: gas inlet, gas outlet
- 10: structure
- 11: gas/air gap
- 12: central portion
- 14: rotation causing portion
- 16: channel
- 18: anchor portion
- 19: guide sleeve
- 20: silencer mesh
- A: first gas passage region
- B: second gas passage region
- C: third gas passage region
- I: high pressure air input
- O: low pressure air output
- x: air route
- S: effective cross-section
- p: slope/increase of effective cross-section

## Claims

1. Actuator arrangement (1) for opening and closing a gas stream (2), the actuator arrangement (1) comprising:
an actuator element being movable between an open and a closed position for opening and closing the gas stream (2);
a gas passage (4) downstream of the actuator element, the gas passage (4) having a gas inlet (4a) and a gas outlet (4b); and
a structure (10) comprising:
a central portion (12); and
a plurality of rotation causing portions (14) which are disposed around a circumference of the central portion (12) and extend outwardly from the central portion (12);
wherein the plurality of rotation causing portions (14) of the structure (10) is disposed between the gas inlet (4a) and the gas outlet (4b) of the gas passage (4); and
wherein the plurality of rotation causing portions (14) is formed in such a way that the gas stream (2), when passing the structure (10) in the gas passage (4), obtains a rotational motion around the central portion of the structure (10).

2. Actuator arrangement (1) according to claim 1, wherein the structure has a screw-like geometry or drilling-bit-like geometry in a direction between the gas inlet (4a) and the gas outlet (4b) of the gas passage (4).

3. Actuator arrangement (1) according to one of the preceding claims, wherein two adjacent rotation causing portions (14) of the plurality of rotation causing portions (14) form a channel (16) which extends in a circumferential direction of the central portion (12) and in an axial direction of the central portion (12).

4. Actuator arrangement (1) according to one of the preceding claims, wherein at least one of the plurality of rotation causing portions (14) extends spirally or helically along the the central portion (12).

5. Actuator arrangement (1) according to one of the preceding claims, wherein a pitch of at least one of the plurality of rotation causing portions (14) is varying along the central portion (12).

6. Actuator arrangement (1) according to one of the preceding claims, wherein the actuator arrangement (1) further comprises a guide sleeve (19) downstream the structure (10) and having a nozzle-like shape with gas twisting ribs.

7. Actuator arrangement (1) according to one of the preceding claims, wherein the structure (10) is a one-piece construction.

8. Actuator arrangement (1) according to one of the preceding claims, wherein at least one of the plurality of rotation causing portions is formed as a blade or a fin.

9. Actuator arrangement (1) according to one of the preceding claims, wherein the structure (10) is a removable insert in the gas passage (4).

10. Actuator arrangement (1) according to one of the preceding claims, wherein the actuator arrangement (1) is a gas valve, in particular an air valve.

11. Actuator arrangement (1) according to claim 10, wherein the gas valve is configured for a braking control system of a vehicle for controlling a gas pressure in a braking system of the vehicle.

12. Braking control system of a vehicle for controlling a gas pressure in a braking system of the vehicle, comprising:
an actuator arrangement (1) according to one of the preceding claims.

13. Vehicle, comprising:
a braking control system according to claim 12 for controlling a gas pressure in a braking system of the vehicle.

14. Use of a structure (10) for noise reduction of an actuator arrangement (1), in particular a gas valve, for opening and closing a gas stream (2), the actuator arrangement (1) comprising:
an actuator element being movable between an open and a closed position for opening and closing the gas stream (2); and
a gas passage (4) downstream of the actuator element, the gas passage (4) having a gas inlet (4a) and a gas outlet (4b);
providing the structure in the actuator arrangement, wherein the structure (10) comprises:
a central portion (12); and
a plurality of rotation causing portions (14) which are disposed around a circumference of the central portion (12) and extend outwardly from the central portion (12);
wherein the plurality of rotation causing portions (14) of the structure (10) is disposed between the gas inlet (4a) and the gas outlet (4b) of the gas passage (4); and
wherein the plurality of rotation causing portions (14) is formed in such a way that the gas stream (2), when passing the structure (10) in the gas passage (4), obtains a rotational motion around the central portion of the structure (10).
